# EUROPEAN PATENT APPLICATION

(11) **EP 1 653 424 A2**
(43) Date of publication of application: **03.05.2006**
(21) Application number: 05292269.7
(22) Date of filing: 26.10.2005
(51) Int. Cl.: G08C 17/02, G08C 23/04

(54) **System and method for interfacing remote controller with digital broadcasting receiver**

(30) Priority: 26.10.2004 KR 2004085690
(71) Applicant: LG Electronics, Inc., Seoul 150-875 (KR)
(72) Inventor: Kim, Ik Ju, Gunpo-si Gyeonggi-do (KR)
(74) Representative: Loisel, Bertrand

(57) **Abstract**

Disclosed herein is a system and method for interfacing a remote controller with a digital broadcasting receiver. The method for interfacing with a digital broadcasting receiver comprises the steps of: defining a protocol for interfacing the digital broadcasting receiver with a remote controller according to information for the remote controller and key information of the remote controller; receiving the information for the remote controller and key information of the remote controller, and setting-up the digital broadcasting receiver according to the defined protocol; and interfacing the digital broadcasting receiver with the remote controller according to the setting-up result when the digital broadcasting receiver receives a control signal through the remote controller.

## Description

This application claims the benefit of Korean Patent Application No.10-2005-0085690, filed on October 26, 2005, which is hereby incorporated by reference as if fully set forth herein.

### BACKGROUND OF THE INVENTION

### Field of the Invention

The present invention relates to an interfacing system, and more particularly, to a system and method for interfacing a remote controller with a digital broadcasting receiver.

### Discussion of the Related Art

Recently analog broadcasting is being rapidly abandoned in favor of digital broadcasting, accordingly, usage of a Set-Top Box (STB) or a digital broadcasting receiver which enables a conventional analog television to receive digital broadcasting is increasing exponentially.

Digital broadcasting is receiving attention because the display quality and sound quality of digital TV broadcasting are much better than in analog TV broadcasting, and because digital broadcasting can provide multimedia functions such as home-shopping, home-banking, internet access, telecommuting, video on demand (VOD), or the like.

A remote controller is generally used as an input means for viewing the digital broadcasting or acquiring required information through a digital television.

In a Java-based data broadcasting system, in order to control a signal inputted through such a remote controller, Java API (Application Programming Interface) and Java application are required, wherein the Java application connected to the Java API performs specific control operations. Herein, the API and the application are constructed on the basis of the Java-based technologies.

When the Java application alone is used in a specific STB/DTV, each of receiver manufacturers may define and use each Java API. However, when a standard Java API is defined, a CP (Content Provider) producing the Java application provides the Java application according to the defined standard Java API, and receiver manufacturers produce a product supporting the standard Java API.

Generally, the standard Java API in relation to the remote controller is specified by the HAVi (Home Audio/Video Interoperability) Level 2 User Interface Standard. This HAVi (Home Audio/Video Interoperability) Level 2 User Interface Standard is a remote controller related general purpose interface which is adopted in both US data broadcasting standard and European data broadcasting standard.

According to the HAVi User Interface Standard, content in relation to the remote controller are disclosed in org.havi.ui.event.HRcCapabilities/org.havi.ui.event.HRcE vent. Herein, in the org.havi.ui.event.HRcCapabilities, there is a function that the application can check various keys supportable in the remote controller. However, in the present HAVi Level 2 User Interface Standard, there is no method for supporting the function that the application can check various keys which are supported by the remote controller.

In order to support this function, the receiver such as the STB or the digital broadcasting receiver must use a method for pre-storing information in relation to keys which are supported by the remote controller or use a method for acquiring information in relation to various keys from the remote controller.

However, since the receiver and the remote controller are currently sold as a set, the former method for pre-storing information in relation to keys supportable in the remote controller is generally used rather than the latter method for acquiring information in relation to various keys from the remote controller.

### SUMMARY OF THE INVENTION

Accordingly, the present invention is directed to a system and method for interfacing a remote controller with a digital broadcasting receiver that substantially obviates one or more problems due to limitations and disadvantages of the related art.

An object of the present invention is to provide a system and method for interfacing a remote controller with a digital broadcasting receiver, wherein the remote controller can transmit information for key supported by the remote controller to the digital broadcasting receiver.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an interfacing system comprises: a remote controller for transmitting a control signal corresponding to a specific key using a protocol, wherein the protocol pre-defines information for the remote controller and key information of the remote controller; and a digital broadcasting receiver for storing the information for the remote controller and key information of the remote controller pre-defined according to the protocol, receiving the control signal transmitted through the remote controller, and performing an operation corresponding to the control signal using the stored key information of the remote controller.

Preferably, the remote controller includes: a key input unit for allowing a user to input key signals; a memory for storing the information for the remote controller and key information of the remote controller; a protocol generating unit for abstracting the information for the remote controller and key information of the remote controller from the memory, and defining the abstracted information into a protocol form so as to transmit the abstracted information; and a transmission unit for transmitting the information for the remote controller and key information of the remote controller which are defined according to the protocol form.

Preferably, the remote controller further includes a control signal generating unit for abstracting key codes of the remote controller from the memory where the key codes correspond to the inputted key signals, and generating control signals including the abstracted key codes of the remote controller.

Preferably, the digital broadcasting receiver includes: a reception unit for receiving the information for the remote controller and key information of the remote controller from the remote controller; a protocol analyzing unit for analyzing the received information according to the protocol; and a storage unit for storing the analyzed information.

Preferably, the digital broadcasting receiver further includes a control unit, when the control signal corresponding to a specific key is inputted from the remote controller, for controlling the operation of the digital broadcasting receiver according to the control signal corresponding to the specific key using the stored key information of the remote controller.

Preferably, the information for the remote controller includes a tag value of a remote controller information message, a byte length next to a length field value, an identification (ID) value of a remote controller manufacturer, an H/W version value of the remote controller, the number of an additionally-described descriptor, a tag value of the descriptor, a byte length of the descriptor, and data of the descriptor.

Preferably, the key information of the remote controller includes a tag value of a remote controller key message, a byte length next to a length field value, the number of key values, physical signal information corresponding to the key value, and a key code value corresponding to the physical signal information.

Preferably, the remote controller includes an additional information transmission key for transmitting the information for the remote controller and key information of the remote controller.

In another aspect of the present invention, a method for interfacing with a digital broadcasting receiver comprises the steps of: defining a protocol for interfacing the digital broadcasting receiver with a remote controller according to information for the remote controller and key information of the remote controller; receiving the information for the remote controller and key information of the remote controller, and setting-up the digital broadcasting receiver according to the defined protocol; and interfacing the digital broadcasting receiver with the remote controller according to the setting-up result when the digital broadcasting receiver receives a control signal through the remote controller.

Preferably, the method further comprises the step of abstracting the information for the remote controller and key information of the remote controller before the step of defining the protocol.

Preferably, the step of receiving the information and setting-up the digital broadcasting receiver includes the steps of: receiving an open session request so as to initiate transmission of the information for the remote controller and key information of the remote controller; receiving a remote controller information message as the information for the remote controller, and a remote controller key message as the key information of the remote controller; and receiving a close session request so as to close the transmission of the information for the remote controller and key information of the remote controller.

Preferably, the step of receiving the information and setting-up the digital broadcasting receiver includes the steps of: receiving an open session request so as to initiate transmission of the information for the remote controller and key information of the remote controller; transmitting an open session response in response to the open session request; receiving a remote controller information message as the information for the remote controller, and a remote controller key message as the key information of the remote controller; transmitting a remote controller information reply in response to the information for the remote controller, and a remote controller key reply in response to the key information of the remote controller; receiving a close session request so as to close the transmission of the information for the remote controller and key information of the remote controller; and transmitting a close session response in response to the close session request.

In yet another aspect of the present invention, a method for interfacing with a digital broadcasting receiver comprises the steps of: receiving information for a remote controller and key information of the remote controller; analyzing the received information for the remote controller and key information of the remote controller according to a pre-defined protocol; and storing the analyzed information for the remote controller and key information of the remote controller.

Preferably, the method comprises the step of controlling, when a control signal with respect to a specific key is inputted from the remote controller, an operation of the digital broadcasting receiver corresponding to the control signal with respect to the specific key using the stored key information of the remote controller.

Preferably, the step of analyzing the received information includes the steps of: receiving an open session request so as to initiate transmission of the information for the remote controller and key information of the remote controller, and then transmitting an open session response in response to the open session request; receiving a remote controller information message as the information for the remote controller, and a remote controller key message as the key information of the remote controller, and then transmitting a remote controller information reply in response to the information for the remote controller, and a remote controller key reply in response to the key information of the remote controller; and receiving a close session request so as to close the transmission of the information for the remote controller and key information of the remote controller, and then transmitting a close session response in response to the close session request.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram showing the configuration of a system for interfacing a remote controller with a digital broadcasting receiver according to the present invention;

FIG. 2 is a view illustrating a storage unit for storing key information for a remote controller according to the present invention;

FIGS. 3A to 3B are views illustrating a method for interfacing a remote controller with a digital broadcasting receiver according to the present invention; and

FIG. 4 is a view illustrating a set of key code sessions pre-defined so as to use in a method for interfacing according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In the present invention, a remote controller transmits information for various keys supported by the remote controller to a digital broadcasting receiver using a common-use protocol, and the digital broadcasting receiver stores and uses the key information which is supported through the remote controller by analyzing the received common-use protocol. Thus, it is possible to commonly use remote controllers of the overall manufacturers.

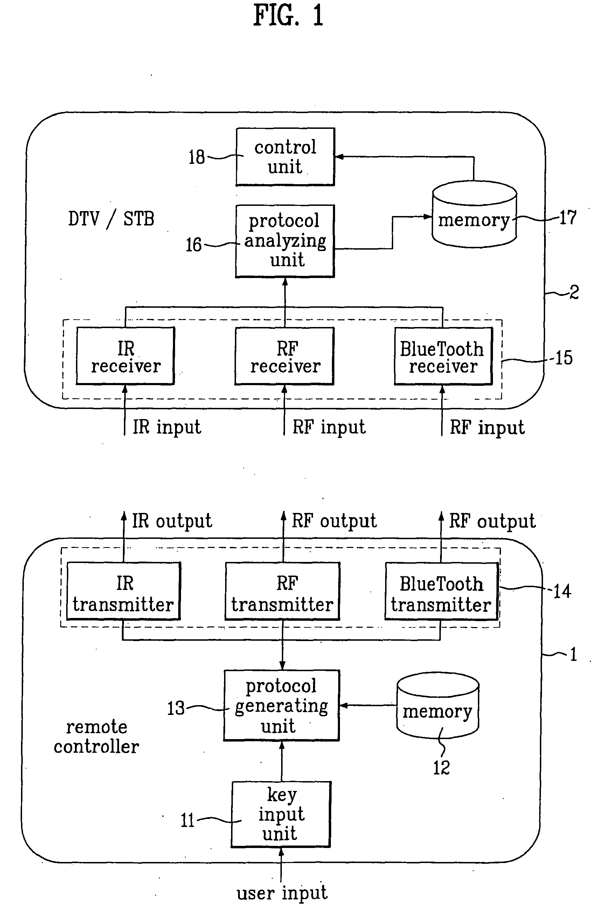

FIG. 1 is a block diagram showing the configuration of a system for interfacing a remote controller with a digital broadcasting receiver according to the present invention.

As shown in FIG. 1, the interfacing system according to the present invention mainly includes a remote controller 1 and a digital broadcasting receiver 2.

The remote controller 1 may be any remote controller of the overall manufacturers. The digital broadcasting receiver 2 may be a Set-Top Box (STB) or a digital TV, etc., wherein manufacturers of the Set-Top Box and the digital TV may be the same or different.

The remote controller 1 transmits a control signal corresponding to a specific key using a protocol, wherein the protocol pre-defines information for the remote controller 1 and key information of the remote controller 1.

The remote controller 1 includes a key input unit 11, a memory 12, a protocol generation unit 13 and a transmitter 14.

A plurality of keys is arranged in the key input unit 11, thereby allowing a user to input key signals. The key input unit 11 may include an additional information transmission key for transmitting the information for the remote controller 1 and key information of the remote controller 1.

The memory 12 stores the information for the remote controller 1 and key information of the remote controller 1.

In addition, the protocol generation unit 13 abstracts the information for the remote controller 1 and key information of the remote controller 1 from the memory 12, and defines the abstracted information into a protocol form so as to transmit the abstracted information.

Herein, the defined information for the remote controller (RC_info_message) may include a tag value of a remote controller information message (rc_info_message_tag), a byte length next to a length field value (length_field()), an identification (ID) value of a remote controller manufacturer (vendor_id), an H/W version value of the remote controller (hardware_version_id), the number of an additionally-described descriptor (number_of_descriptors), a tag value of the descriptor (descriptor_tag), a byte length of the descriptor (descriptor_len), and data of the descriptor (descriptor_data()), etc.

In addition, the defined key information of the remote controller (RC_key_message) may include a tag value of a remote controller key message (rc_key_message_tag), a byte length next to a length field value (length_field()), the number of key values (number_of keys), physical signal information corresponding to the key value (keySignal), and a key code value corresponding to the physical signal information (keyCode), etc.

The transmission unit 14 transmits the information for the remote controller 1 and key information of the remote controller 1 which are defined according to the protocol form. Herein, the transmission unit 14 may be at least any one transmitter selected from among an Infrared ray (IR) transmitter, a Radio Frequency (RF) transmitter and a Bluetooth transmitter.

In addition, the remote controller may further include a control signal generating unit (not shown). The control signal generating unit abstracts key codes of the remote controller 1 from the memory 12 where the key codes correspond to the inputted key signals, and generates control signals including the abstracted key codes of the remote controller 1.

On the other hand, the digital broadcasting receiver 2 receives and stores the information of the remote controller 1 and key information of the remote controller 1 defined according to the protocol form through the remote controller 1.

In addition, when the control signal corresponding to a specific key is inputted from the remote controller, the digital broadcasting receiver 2 performs an operation according to the control signal corresponding to the specific key using the stored key information of the remote controller 1.

The digital broadcasting receiver 2 may include a reception unit 15, a protocol analyzing unit 16, a storage unit 17 and a control unit 18.

Herein, the reception unit 15 receives the information of the remote controller 1 and key information of the remote controller 1 defined according to the protocol form through the remote controller 1. The reception unit 15 may include at least any one receiver selected from among an Infrared Ray (IR) receiver, a Radio Frequency (RF) receiver and a Bluetooth receiver.

The protocol analyzing unit 16 analyzes the received information of the remote controller 1 and key information of the remote controller 1. In addition, the storage unit 17 stores the analyzed information of the remote controller 1 and key information of the remote controller 1.

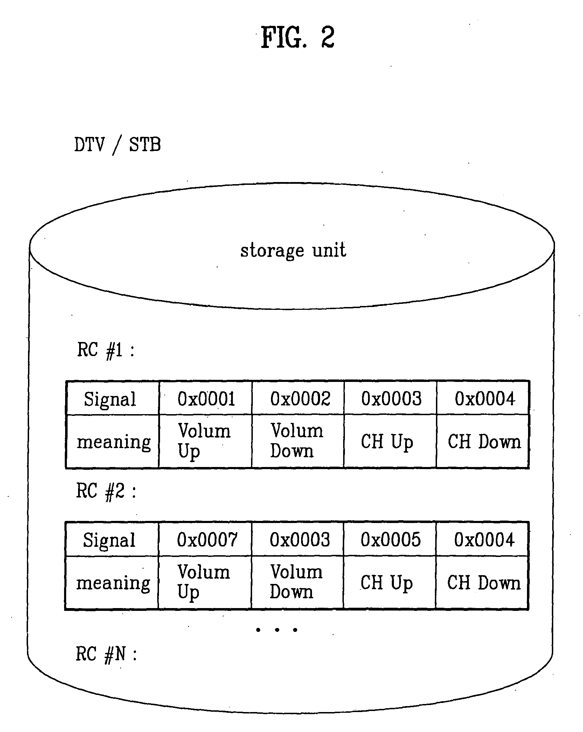

FIG. 2 is a view illustrating a storage unit for storing key information for a remote controller according to the present invention. The storage unit 17 may store information for one remote controller as shown in FIG. 2, or may also store information for a plurality of remote controllers. In a case of the plurality of remote controllers, the storage unit 17 stores the information for the remote controller in a storage area through an identification number of each remote controller.

When the control signal corresponding to a specific key is inputted from the remote controller 1, the control unit 18 controls the operation of the digital broadcasting receiver 2 according to the control signal corresponding to the specific key using the key information of the remote controller stored in the memory 17.

Now, a method for interfacing the remote controller with the digital broadcasting receiver using the above system configuration will be explained as follows.

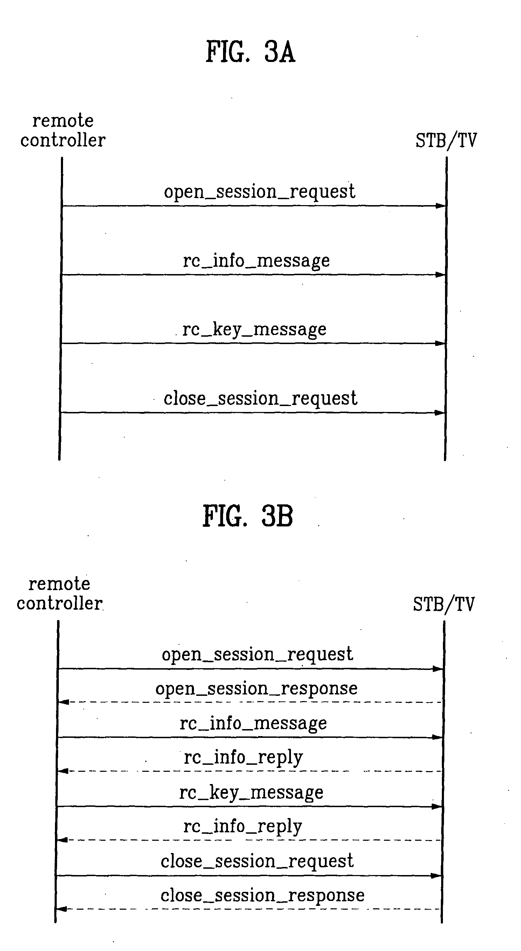

FIGS. 3A to 3B are views illustrating a method for interfacing a remote controller with a digital broadcasting receiver according to the present invention. FIG. 3A shows a uni-directional interface type, and FIG. 3B shows a bi-directional interface type.

To begin with, by means of a user input, the remote controller 1 abstracts the information for the remote controller 1 and key information of the remote controller 1 from the memory 17 so as to transmit the information. Herein, the user may use an additional information transmission key for transmitting the information for the remote controller 1 and key information of the remote controller 1.

Next, the remote controller 1 defines the information for the remote controller 1 and key information of the remote controller 1 in a protocol form. Then, the remote controller 1 transmits the information for the remote controller 1 and key information of the remote controller 1 defined according to the protocol form.

At this time, the remote control 1 may transmit the information in two types as shown in FIGS. 3A and 3B.

In the uni-directional interface type as shown in FIG. 3A, the remote controller 1 transmits an open session request (open_session_request) to the digital broadcasting receiver 2 to transmit the information for the remote controller 1 and key information of the remote controller 1.

Herein, the open session request (open_session_ request) may be a tag value of the open session request (open_session_request_tag), a byte length next to a length field value (length_field()), and an identification (ID) value of an open session requester (resource_identifiers()), etc. That is, the open session request (open_session_ request) may be defined as follows.

| Open Session Request | | | |
|---|---|---|---|
| Syntax | Value | # of bits | Mnemonic |
| Open_session_request() { | | | |
| open_session_request_tag | | 8 | uimsbf |
| length_field() | | 8 | uimsbf |
| resource_identifier() | 4 | 32 | uimsbf |
| } | | | |

Next, the remote controller 1 transmits the remote controller information message (RC_info_message) as the information for the remote controller 1, and then transmits the remote controller key message (RC_key_message) as the key information of the remote controller 1. At this time, the remote controller key message (RC_key_message) may be transmitted prior to the remote controller information message (RC_info_message).

Herein, the remote controller information message (RC_info_message) may include a tag value of a remote controller information message (rc_info_message_tag), a byte length next to a length field value (length_field()), an identification (ID) value of a remote controller manufacturer (vendor_id), an H/W version value of the remote controller (hardware_version_id), the number of an additionally-described descriptor (number_of_descriptors), a tag value of the descriptor (descriptor_tag), a byte length of the descriptor (descriptor_len), and data of the descriptor (descriptor_data()), etc. That is, the remote controller information message (RC_info_message) may be defined as follows.

| RC Info Message | | | | | |
|---|---|---|---|---|---|
| Syntax | | | Value | # of bits | Mnemonic |
| RC_info_message() { | | | | | |
| | rc_info_message_tag | | | | |
| | length_field() | | | 8 | uimsbf |
| | vendor_id | | | 8 | uimsbf |
| | hardware_version_id | | | 24 | uimsbf |
| | number_of_descriptors | | | 32 | uimsbf |
| | for (i=0; i<number_of_descriptors;i++) { | | | 8 | uimsbf |
| | | descriptor_tag | | | |
| | | descriptor_len | | 8 | uimsbf |
| | | descriptor_data() | | 8 | uimsbf |
| } | | | | | |

In addition, the remote controller key message (RC_key_message) may include a tag value of a remote controller key message (rc_key_message_tag), a byte length next to a length field value (length_field()), the number of key values (number_of keys), physical signal information corresponding to the key value (keySignal), and a key code value corresponding to the physical signal information (keyCode), etc. That is, the remote controller key message (RC_key_message) may be defined as follows.

| RC Key Message | | | | | |
|---|---|---|---|---|---|
| Syntax | | | Value | # of bits | Mnemonic |
| RC_key_message() { | | | | | |
| | rc_key_message_tag | | | | |
| | length_field() | | | 8 | uimsbf |
| | number_of_keys | | | 16 | uimsbf |
| | for(i=0;i<number_of_keys;i++) { | | | 8 | uimsbf |
| | | keySignal | | | |
| | | keyCode | | 32 | uimsbf |
| | } | | | 16 | uimsbf |
| } | | | | | |

Next, the remote controller 1 transmits a close session request (close_session_request) so as to close the transmission of the information for the remote controller 1 and key information of the remote controller 1.

Herein, the close session request (close_session_ request) may include a tag value of the close session request (cpose_session_request_tag), a byte length next to a length field value (length field()), and an identification (ID) value of a close session requester (resource_identifier()), etc.
That is, the close session request (close_session_ request) may be defined as follows.

| Close Session Request | | | | |
|---|---|---|---|---|
| Syntax | | Value | # of bits | Mnemonic |
| Close_session_request() { | | | | |
| | close_session_request_tag | | 8 | uimsbf |
| | length_field() | | 8 | uimsbf |
| resource_identifier() } | | | 32 | uimsbf |
| | } | | | |

On the other hand, in the bi-directional interface type as shown in FIG. 3B, the remote controller 1 transmits an open session request (open_session_request) to the digital broadcasting receiver 2 to transmit the information for the remote controller 1 and key information of the remote controller 1.

Next, the remote controller 1 receives an open session response (open_session_response) in response to the open session request (open_session_request) from the digital broadcasting receiver 2.

Herein, the open session response (open_session_ response) may include a tag value of the open session response (open_session_response_tag), a byte length next to a length field value (length_field()), information with respect to a state of a connection to the digital broadcasting receiver (session_state), a resource ID value for notifying an authorized resource with respect to the request (resource_identifier()), and a connected session number (session_nb), etc. At this time, the resource ID value must match the ID value of the open session requester. That is, the open session response (open_session_response) may be defined as follows.

| Open Session Response | | | | |
|---|---|---|---|---|
| Syntax | | Value | # of bits | Mnemonic |
| Open_session_response() { | | | | |
| | open_session_response_tag | | 8 | uimsbf |
| | length_field() | | 8 | uimsbf |
| | session_ststus | | 8 | uimsbf |
| | resource_identifier() | | 32 | uimsbf |
| | session_nb } | | 16 | uimsbf |
| | } | | | |

Next, the remote controller 1 transmits the remote controller information message (RC_info_message) as the information for the remote controller 1, and then transmits the remote controller key message (RC_key_message) as the key information of the remote controller 1.

Next, the remote controller 1 receives a remote controller information reply (rc_info_reply) in response to the remote controller information request (RC_info_request) from the digital broadcasting receiver 2, and then receives a remote controller key reply (rc_key_reply) in response to the remote controller key request (RC_key_request) from the digital broadcasting receiver 2. At this time, the remote controller key reply (rc_key_reply) may receive prior to the remote controller information reply (rc_info_reply).

Herein, the remote controller information reply (rc_info_reply) may include a tag value of the remote controller information reply (rc_info_reply_tag), a byte length next to a length field value (length_field()), and response data of the digital broadcasting receiver (host_response), etc., wherein the response data of the broadcasting receiver (host_response) are data indicating that reception of the remote controller information message (RC_info_message) is completed. That is, the remote controller information reply (rc_info_reply) may be defined as follows.

| RC Info Reply | | | | |
|---|---|---|---|---|
| Syntax | | Value | # of bits | Mnemonic |
| RC_info_reply() { | | | | |
| | rc_info_reply_tag | | 8 | uimsbf |
| | length_field() | | 8 | uimsbf |
| | host_response | | 8 | uimsbf |
| } | | | | |

In addition, the remote controller key reply (rc_key_reply) may include a tag value of the remote controller key reply (rc_key_reply_tag), a byte length next to a length field value (length_field()), and response data of the digital broadcasting receiver (host_response), etc., wherein the response data of the broadcasting receiver (host_response) are data indicating that reception of the remote controller key message (rc_key_message) is completed. That is, the remote controller key reply (rc_key_reply) may be defined as follows.

| RC Key Reply | | | | |
|---|---|---|---|---|
| Syntax | | Value | # of bits | Mnemonic |
| RC_key_reply() { | | | | |
| | rc_key_reply_tag | | 8 | uimsbf |
| | length_field() | | 8 | uimsbf |
| | host_response | | 8 | uimsbf |
| | } | | | |

Next, the remote controller 1 transmits a close session request (close_session_request) so as to close the transmission of the information for the remote controller 1 and key information of the remote controller 1.

Next, the remote controller 1 receives a close session response (close_session_response) in response to the close session request (close_session_request) from the digital broadcasting receiver 2.

Herein, the close session response (close_session_response) may include a tag value of the close session response (close_session_response_tag), a byte length next to a length field value (length_field()), a resource ID value for notifying an authorized resource with respect to the request (resource_identifier()), and a disconnected session number (session_nb), etc. Herein, the resource ID value must match the ID value of the close session requester. That is, the close session response (close_session-_response) may be defined as follows.

| Close Session Response | | | | |
|---|---|---|---|---|
| Syntax | | Value | # of bits | Mnemonic |
| Close_session_response() { | | | | |
| | close_session_response_tag | | 8 | uimsbf |
| | length_field() | | 8 | uimsbf |
| | session_ststus | | 8 | uimsbf |
| | resource_identifier() | | 32 | uimsbf |
| | session_nb | | 16 | uimsbf |
| } | | | | |

On the other hand, as note the above, the digital broadcasting receiver 2 receives the information for the remote controller 1 and key information of the remote controller 1 defined according to the protocol form.

Next, the digital broadcasting receiver 2 analyzes the received information for the remote controller 1 and key information of the remote controller 1, and stores the analyzed information for the remote controller 1 and key information of the remote controller 1 in the memory 17.

When the control signal corresponding to a specific key is inputted from the remote controller 1, the digital broadcasting receiver 2 performs the operation according to the control signal corresponding to the specific key using the key information of the remote controller stored in the memory 17.

In a case where the method for interfacing the remote controller 1 with the digital broadcasting receiver 2 uses the bi-directional interface type, as noted above, when the digital broadcasting receiver 2 receives the open session request (open-session_request) for transmitting the information for the remote controller 1 and key information of the remote controller 1, the digital broadcasting receiver 2 transmits the open session response (open_session_response) in response to the received open session request.

In addition, when the digital broadcasting receiver 2 receives any one of the remote control information message (RC_info_message) as the information for the remote controller 1 and the remote control key message (RC_key_message) as the key information of the remote controller 1, the digital broadcasting receiver 2 transmits any one of the remote controller information reply (rc_info_reply) in response to the remote controller information message and the remote controller key reply (rc_key_reply) in response to the remote controller key message.

When the digital broadcasting receiver 2 receives the close session request (close_session_request) so as to close the transmission of the information for the remote controller 1 and key information of the remote controller 1, the digital broadcasting receiver 2 transmits the close session response (close_session_response) in response to the close session request.

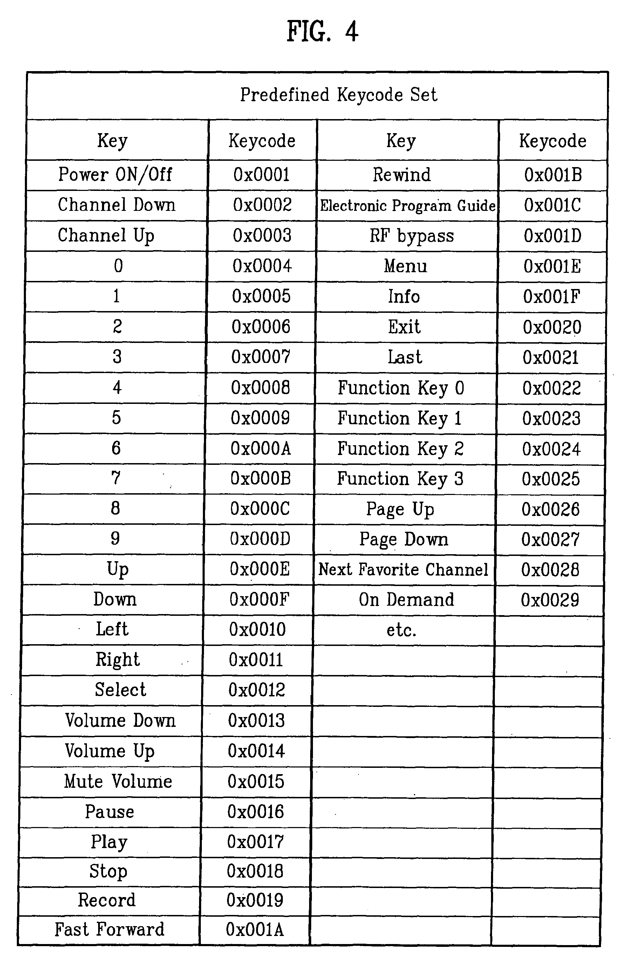

FIG. 4 is a view illustrating a set of key code sessions pre-defined so as to use in a method for interfacing according to the present invention.

As shown in this drawing, the remote controller 1 transmits a key code through the remote controller key message to the digital broadcasting receiver 2. Herein, 'key code' means key values corresponding to each key signal. In addition, the above-defined value, # of bits, and syntax may be variously selected.

The present invention can define and use the above transmission protocol so that the remote controller can transmit the information for various keys of the remote controller to the digital broadcasting receiver.

As apparent from the above description, the present invention provides a system and method for interfacing a remote controller with a digital broadcasting receiver, wherein, it is possible to use a remote controller produced by any manufacturer since a common protocol is used, and also apply to the system which uses a plurality of remote controllers.

In addition, it is possible to apply to a case that another remote controller is used due to malfunction of the remote controller, or the like. In addition, it is possible to apply to a case that the digital broadcasting receiver and the remote controller are produced by different manufacturers, and to a case that a TV and a Set-Top Box (STB) produced by different manufacturers.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. An interfacing system comprising:
a remote controller for transmitting a control signal corresponding to a specific key using a protocol,
wherein the protocol pre-defines information for the remote controller and key information of the remote controller; and
a digital broadcasting receiver for storing the information for the remote controller and key information of the remote controller pre-defined according to the protocol, receiving the control signal transmitted through the remote controller, and performing an operation corresponding to the control signal using the stored key information of the remote controller.

2. The interfacing system as set forth in claim 1,
wherein the remote controller includes:
a key input unit for allowing a user to input key signals;
a memory for storing the information for the remote controller and key information of the remote controller;
a protocol generating unit for abstracting the information for the remote controller and key information of the remote controller from the memory, and defining the abstracted information into a protocol form so as to transmit the abstracted information; and
a transmission unit for transmitting the information for the remote controller and key information of the remote controller which are defined according to the protocol form.

3. The interfacing system as set forth in claim 2,
wherein the remote controller further includes a control signal generating unit for abstracting key codes of the remote controller from the memory where the key codes correspond to the inputted key signals, and generating control signals including the abstracted key codes of the remote controller.

4. The interfacing system as set forth in claim 2,
wherein the transmission unit includes at least any one transmitter selected from among an Infrared Ray (IR) transmitter, a Radio Frequency (RF) transmitter and a Bluetooth transmitter.

5. The interfacing system as set forth in claim 1,
wherein the digital broadcasting receiver includes:
a reception unit for receiving the information for the remote controller and key information of the remote controller from the remote controller;
a protocol analyzing unit for analyzing the received information according to the protocol; and
a storage unit for storing the analyzed information.

6. The interfacing system as set forth in claim 5,
wherein the digital broadcasting receiver further includes a control unit, when the control signal corresponding to a specific key is inputted from the remote controller, for controlling the operation of the digital broadcasting receiver according to the control signal corresponding to the specific key using the stored key information of the remote controller.

7. The interfacing system as set forth in claim 5,
wherein the reception unit includes at least any one receiver selected from among an Infrared Ray (IR) receiver, a Radio Frequency (RF) receiver and a Bluetooth receiver.

8. The interfacing system as set forth in claim 1,
wherein the information for the remote controller includes a tag value of a remote controller information message, a byte length next to a length field value, an identification (ID) value of a remote controller manufacturer, an H/W version value of the remote controller, the number of an additionally-described descriptor, a tag value of the descriptor, a byte length of the descriptor, and data of the descriptor.

9. The interfacing system as set forth in claim 1,
wherein the key information of the remote controller includes a tag value of a remote controller key message, a byte length next to a length field value, the number of key values, physical signal information corresponding to the key value, and a key code value corresponding to the physical signal information.

10. The interfacing system as set forth in claim 1,
wherein the remote controller includes an additional information transmission key for transmitting the information for the remote controller and key information of the remote controller.

11. A method for interfacing with a digital broadcasting receiver, the method comprising the steps of:
defining a protocol for interfacing the digital broadcasting receiver with a remote controller according to information for the remote controller and key information of the remote controller;
receiving the information for the remote controller and key information of the remote controller, and setting-up the digital broadcasting receiver according to the defined protocol; and
interfacing the digital broadcasting receiver with the remote controller according to the setting-up result when the digital broadcasting receiver receives a control signal through the remote controller.

12. The method as set forth in claim 11, further comprising the step of abstracting the information for the remote controller and key information of the remote controller before the step of defining the protocol.

13. The method as set forth in claim 11, wherein the step of receiving the information and setting-up the digital broadcasting receiver includes the steps of:
receiving an open session request so as to initiate transmission of the information for the remote controller and key information of the remote controller;
receiving a remote controller information message as the information for the remote controller, and a remote controller key message as the key information of the remote controller; and
receiving a close session request so as to close the transmission of the information for the remote controller and key information of the remote controller.

14. The method as set forth in claim 13, wherein the open session request includes a tag value of the open session request, a byte length next to a length field value, and an identification (ID) value of an open session requester.

15. The method as set forth in claim 13, wherein the remote controller information message includes a tag value of the remote controller information message, a byte length next to a length field value, an identification (ID) value of a remote controller manufacturer, an H/W version value of the remote controller, the number of an additionally-described descriptor, a tag value of the descriptor, a byte length of the descriptor, and data of the descriptor.

16. The method as set forth in claim 13, wherein the remote controller key message includes a tag value of the remote controller key message, a byte length next to a length field value, the number of key values, physical signal information corresponding to the key value, and a key code value corresponding to the physical signal information.

17. The method as set forth in claim 13, wherein the close session request includes a tag value of the close session request, a byte length next to a length field value, and an identification (ID) value of a close session requester.

18. The method as set forth in claim 13, wherein the step of receiving the information and setting-up the digital broadcasting receiver includes the steps of:
receiving an open session request so as to initiate transmission of the information for the remote controller and key information of the remote controller;
transmitting an open session response in response to the open session request;
receiving a remote controller information message as the information for the remote controller, and a remote controller key message as the key information of the remote controller;
transmitting a remote controller information reply in response to the information for the remote controller, and a remote controller key reply in response to the key information of the remote controller;
receiving a close session request so as to close the transmission of the information for the remote controller and key information of the remote controller; and
transmitting a close session response in response to the close session request.

19. The method as set forth in claim 18, wherein the open session response includes a tag value of the open session response, a byte length next to a length field value, information with respect to a state of a connection to the digital broadcasting receiver, a resource ID value for notifying an authorized resource with respect to the request, and a connected session number.

20. The method as set forth in claim 19, wherein the resource ID value matches the ID value of the open session requester.

21. The method as set forth in claim 18, wherein the remote controller information reply includes a tag value of the remote controller information reply, a byte length next to a length field value, and response data of the digital broadcasting receiver.

22. The method as set forth in claim 21, wherein the response data of the broadcasting receiver are data indicating that reception of the remote controller information message is completed.

23. The method as set forth in claim 18, wherein the remote controller key reply includes a tag value of the remote controller key reply, a byte length next to a length field value, and response data of the digital broadcasting receiver.

24. The method as set forth in claim 23, wherein the response data of the broadcasting receiver are data indicating that reception of the remote controller key message is completed.

25. The method as set forth in claim 18, wherein the close session response includes a tag value of the close session response, a byte length next to a length field value, a resource ID value for notifying an authorized resource with respect to the request, and a disconnected session number.

26. The method as set forth in claim 25, wherein the resource ID value matches the ID value of the close session requester.

27. A method for interfacing with a digital broadcasting receiver, the method comprising the steps of:
receiving information for a remote controller and key information of the remote controller;
analyzing the received information for the remote controller and key information of the remote controller according to a pre-defined protocol; and
storing the analyzed information for the remote controller and key information of the remote controller.

28. The method as set forth in claim 27, further comprising the step of controlling, when a control signal with respect to a specific key is inputted from the remote controller, an operation of the digital broadcasting receiver corresponding to the control signal with respect to the specific key using the stored key information of the remote controller.

29. The method as set forth in claim 11, wherein the step of analyzing the received information includes the steps of:
receiving an open session request so as to initiate transmission of the information for the remote controller and key information of the remote controller, and then transmitting an open session response in response to the open session request;
receiving a remote controller information message as the information for the remote controller, and a remote controller key message as the key information of the remote controller, and then transmitting a remote controller information reply in response to the information for the remote controller, and a remote controller key reply in response to the key information of the remote controller; and
receiving a close session request so as to close the transmission of the information for the remote controller and key information of the remote controller, and then transmitting a close session response in response to the close session request.

30. The method as set forth in claim 29, wherein the open session response includes a tag value of the open session response, a byte length next to a length field value, information with respect to a state of a connection to the digital broadcasting receiver, a resource ID value for notifying an authorized resource with respect to the request, and a connected session number.

31. The method as set forth in claim 30, wherein the resource ID value accords with the ID value of the open session requester.

32. The method as set forth in claim 29, wherein the remote controller information reply includes a tag value of the remote controller information reply, a byte length next to a length field value, and response data of the digital broadcasting receiver.

33. The method as set forth in claim 32, wherein the response data of the broadcasting receiver are data indicating that reception of the remote controller information message is completed.

34. The method as set forth in claim 29, wherein the remote controller key reply includes a tag value of the remote controller key reply, a byte length next to a length field value, and response data of the digital broadcasting receiver.

35. The method as set forth in claim 34, wherein the response data of the digital broadcasting receiver are data indicating that reception of the remote controller key message is completed.

36. The method as set forth in claim 29, wherein the close session response includes a tag value of the close session response, a byte length next to a length field value, a resource ID value for notifying an authorized resource with respect to the request, and a disconnected session number.

37. The method as set forth in claim 36, wherein the resource ID value accords with the ID value of the close session requester.
